# EUROPEAN PATENT APPLICATION

(11) **EP 0 798 473 A2**
(43) Date of publication of application: **01.10.1997**
(21) Application number: 97104619.8
(22) Date of filing: 18.03.1997
(51) Int. Cl.: F15B 15/28, F16H 25/20

(54) **Linear actuator provided with limit microswitches having a very simple adjustment**

(30) Priority: 25.03.1996 IT MI960230 U
(71) Applicant: CIAR S.r.l., I-61100 Pesaro (IT)
(72) Inventor: Marcantoni, Egidio, 61100 Pesaro (IT)
(74) Representative: Modiano, Guido, Dr.-Ing.

(57) **Abstract**

A linear actuator provided with limit microswitches (7,8) having a very simple adjustment, comprising a casing (2) which accommodates an element (4) movable on command along an actuation direction, a guide (9) being connected to the casing (2) and supporting two microswitches (7,8) which are spaced from each other along the actuation direction of the moving element (4) and can be actuated by the moving element (4) when two preset positions are reached during its movement along the actuation direction. The guide (9) is provided in at least two parts (9a,9b) which are slidingly coupled to each other along a direction which is substantially parallel to the sliding direction. The two microswitches (7,8) are connected respectively to one (9a) of the two guide parts (9a,9b) and to the other one (9b) of the guide parts (9a,9b) so as to allow to adjust the distance between the two microswitches (7,8) through the sliding of one of the two guide parts with respect to the other, without having to disassemble the actuator in any way.

## Description

The present invention relates to a linear actuator provided with limit microswitches having a very simple adjustment.

Conventional linear actuators of the mechanical type are constituted by a casing inside which a substantially cylindrical seat is provided which accommodates, in an axially slidable manner, a moving element which is also substantially cylindrical and protrudes, with one of its axial ends, from the casing in order to be connected to the mechanical element which must be actuated by the linear actuator.

In particular, linear actuators are known in which the moving element is moved along the casing by means of a threaded shaft that couples to a female thread formed in the moving element and is rotated about its own axis by an electric motor accommodated in the casing and connected to the threaded shaft by means of an adapted reduction unit or overgear unit.

These linear actuators very often use limit microswitches which are installed inside an adapted guide which is connected to the outer lateral surface of the casing of the actuator at openings formed in the casing skirt so as to allow the microswitches arranged at said openings to be contacted by the moving element when two preset positions are reached during its axial movement, said two positions corresponding substantially to the two stroke limit positions chosen for the moving element.

The guide is generally provided monolithically and the two microswitches are arranged in preset regions inside the guide.

If it is necessary to vary the stroke limit positions of the moving element due to operating requirements of the actuator, it is necessary to vary the position of the two microswitches.

In order to perform this operation, with currently commercially available actuators it is necessary to partially disassemble the actuator, i.e., to remove the guide that supports the microswitches and shift one or both of the microswitches inside the guide according to requirements.

Indeed because of the fact that this operation entails partial disassembly of the actuator, it requires relatively long execution times, also because in order to remove the guide from the actuator casing, other disassembly operations are very often required in order to access said actuator.

A principal aim of the present invention is to obviate the above drawbacks by providing a linear actuator provided with limit microswitches in which it is possible to adjust the position of the microswitches very simply and rapidly.

Within the scope of this aim, an object of the present invention is to provide a linear actuator provided with limit microswitches in which adjustment of the position of the limit microswitches does not require any disassembly of the actuator.

Another object of the present invention is to provide a linear actuator which can be manufactured at competitive costs with respect to those of currently commercially available linear actuators.

This aim, these objects, and others which will become apparent hereinafter are achieved by a linear actuator provided with limit microswitches, comprising a casing which accommodates an element movable on command along an actuation direction and a guide connected to said casing and supporting at least two microswitches which are spaced from one another along said actuation direction and can be actuated by said moving element when two preset positions are reached during its movement along said actuation direction, characterized in that said guide is provided in at least two parts which are slidingly coupled to each other along a direction which is substantially parallel to said actuation direction, said microswitches being connected respectively to one of said two guide parts and to the other one of said guide parts in order to adjust the distance between said two microswitches through the sliding of one of said two guide parts with respect to the other.

Further characteristics and advantages will become apparent from the following detailed description of a linear actuator according to the present invention, illustrated only by way of non-limitative example in the accompanying drawings, wherein:

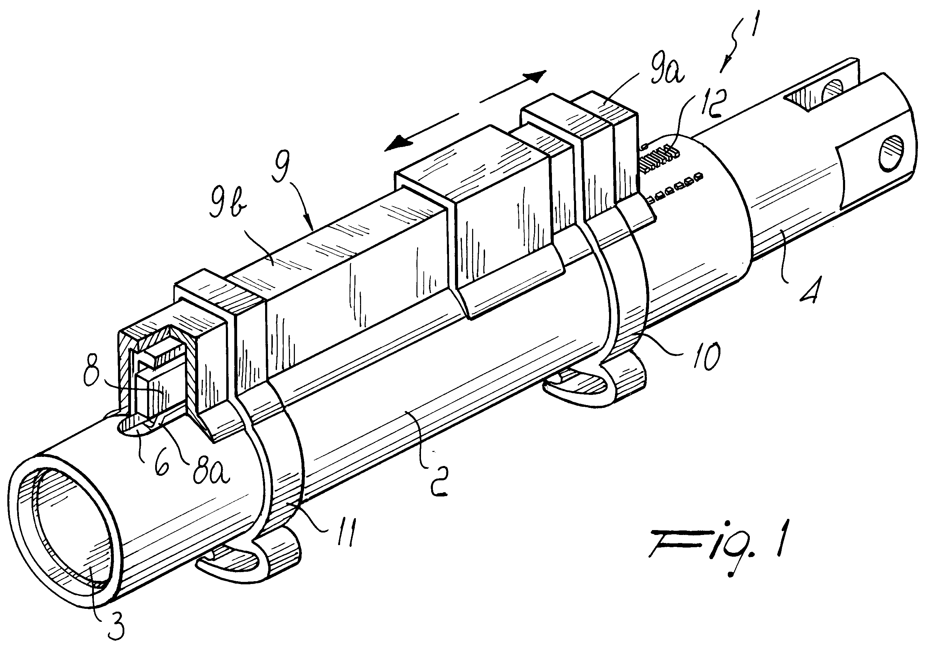

figure 1 is a perspective view of the linear actuator according to the present invention, with an end portion of the guide shown in cutout view;

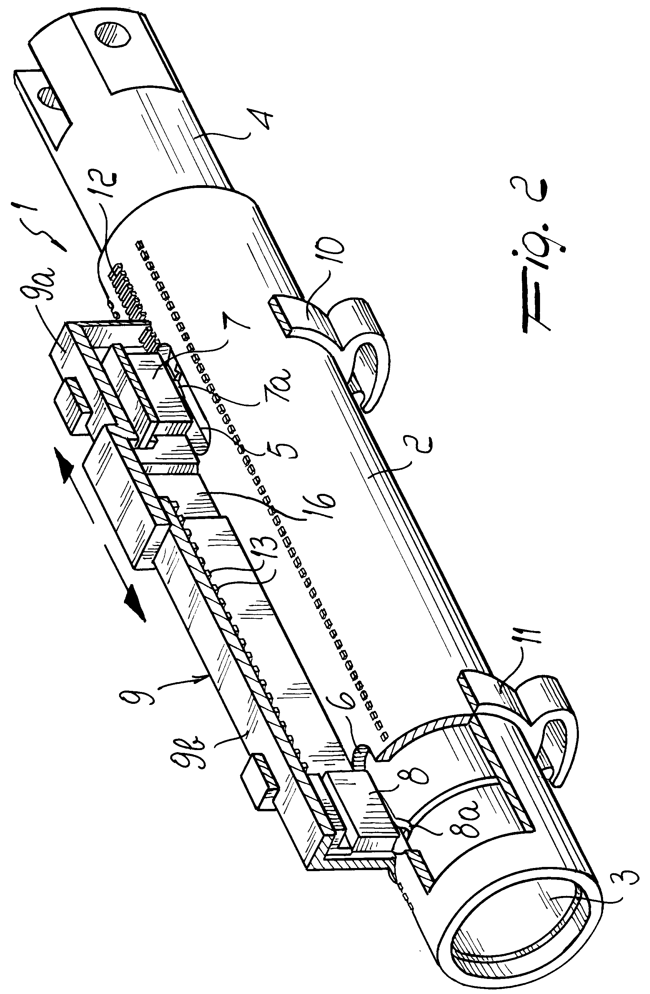

figure 2 is a perspective view of the linear actuator according to the present invention, with the guide and part of the actuator casing shown in cutout view.

With reference to the above figures, the linear actuator according to the invention, generally designated by the reference numeral 1, comprises a casing 2, inside which a preferably substantially cylindrical seat 3 is provided which accommodates, so that it can slide axially, a moving element 4 which can be actuated along its own axis in a per se known manner.

The moving element 4 can be moved along the seat 3 for example, in a per se known manner, by a threaded shaft arranged coaxially inside the seat 3 and coupling with a female thread formed axially in the element 4. The threaded shaft, not shown for the sake of simplicity, can be rotated about its own axis by a gearmotor, for example an electrically-driven gearmotor, which is also accommodated inside the casing 2, illustrated only partially for the sake of simplicity.

The casing 2 has, on its skirt, two openings 5 and 6 whereat two microswitches, designated by the reference numerals 7 and 8 respectively, are provided, each microswitch having a respective contact element, 7a and 8a, which is meant to be contacted by the moving element 4 when the moving element, during its movement in an axial direction with respect to the casing 2, assumes two preset positions which correspond substantially to the two stroke limit positions of the moving element 4.

The two microswitches 7 and 8 are connected to the motor which drives the moving element 4 so as to stop the actuation of the moving element 4 when the moving element reaches the chosen stroke limit positions.

The two microswitches 7 and 8 are supported by a guide 9 which is connected, for example by means of a pair of straps 10 and 11, to the casing 2 at the openings 5 and 6.

According to the invention, the guide 9 is formed by at least two parts 9a and 9b which are coupled so that they can slide with respect to each other in a direction which is substantially parallel to the actuation direction of the moving element 4. The microswitches 7 and 8 are connected respectively to the part 9a and to the part 9b so that it is possible to adjust the distance between the microswitches 7 and 8 simply through the sliding of the part 9a with respect to the part 9b, or viceversa, without having to disassemble the guide from the actuator casing 2 at all.

Advantageously, in the region of the casing 2 proximate to which the guide 9 is mounted, it is possible to provide reference notches 12, constituted for example by teeth, which are equidistantly spaced from each other in a direction which is parallel to the actuation direction of the moving element 4 and can be engaged by the end edge of the guide 9.

Teeth 13, which are mutually equidistant along a direction parallel to the actuation direction of the moving element 4, can be provided inside the guide 9 as well, in order to facilitate the positioning of the microswitches 7 and 8 inside the guide.

Conveniently, the part 9b of the guide 9 can slide inside the part 9a of the guide, which has, on its side directed towards the part 9b, an adapted sliding seat 16.

In practice, in the linear actuator according to the invention, if it is necessary to vary the two stroke limit positions of the moving element 4, or if it is necessary to vary the mutual position of the microswitches 7 and 8, it is sufficient to act on one part 9a or 9b of the guide so as to make it slide, parallel to the actuation direction of the moving element 4, with respect to the other part 9b or 9a from the outside, without having to disassemble the actuator.

Of course, if it is necessary to vary the position of the microswitches 7 and 8 without varying their mutual distance, it is possible in any case to move the guide 9 parallel to the actuation direction of the moving element 4 as if it were a single part.

In practice it has been observed that the linear actuator according to the invention fully achieves the intended aim and objects, since it allows to adjust the position of the limit microswitches directly from outside, very easily, and without requiring any operation for the disassembly of the linear actuator.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A linear actuator provided with limit microswitches, comprising a casing which accommodates an element movable on command along an actuation direction and a guide connected to said casing and supporting at least two microswitches which are spaced from each other along said actuation direction and can be actuated by said moving element when two preset positions are reached during its movement along said actuation direction, characterized in that said guide is provided in at least two parts which are slidingly coupled to each other along a direction which is substantially parallel to said actuation direction, said microswitches being connected respectively to one of said two guide parts and to the other one of said guide parts in order to adjust the distance between said two microswitches through the sliding of one of said two guide parts with respect to the other.

2. A linear actuator according to claim 1, characterized in that said one guide part can slide inside the other guide part.

3. A linear actuator according to claims 1 and 2, characterized in that said casing, proximate to said guide, has reference notches for the positioning of the guide.

4. A linear actuator according to claim 3, characterized in that said reference notches comprise equidistant teeth on the outer surface of said casing, said teeth being parallel to said actuation direction and being engageable by said guide.

5. A linear actuator according to claim 1, characterized in that said microswitches are arranged at openings formed in said casing in order to interact with said moving element.

6. A linear actuator according to claim 1, characterized in that said moving element is constituted by a cylinder which can slide axially along said casing.
